(19) **Europäisches Patentamt European Patent Office Office européen des brevets**

(11) **EP 1 971 550 B1**

(12) **EUROPEAN PATENT SPECIFICATION**

(45) Date of publication and mention
of the grant of the patent:
**22.09.2010 Bulletin 2010/38**

(51) Int Cl.:
*C01G 25/02* *(2006.01)* *C01G 53/04* *(2006.01)*

(21) Application number: **06824364.1**

(86) International application number:
**PCT/NO2006/000454**

(22) Date of filing: **01.12.2006**

(87) International publication number:
**WO 2007/064230 (07.06.2007 Gazette 2007/23)**

(54) **NANOPARTICLES, AND A METHOD OF SOL-GEL PROCESSING**

NANOPARTIKEL UND VERFAHREN ZUR SOL-GEL-VERARBEITUNG

NANOPARTICULES ET PROCEDE DE TRAITEMENT SOL-GEL

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.12.2005 NO 20055721**

(43) Date of publication of application:
**24.09.2008 Bulletin 2008/39**

(73) Proprietor: **Prototech AS
5892 Bergen (NO)**

(72) Inventor: **SUCIU, Crina, Silvia
N-5227 Nesttun (NO)**

(74) Representative: **Hindenes, Jan-Ove et al
Acapo AS
P.O. Box 1880 Nordnes
5817 Bergen (NO)**

(56) References cited:
**US-A- 3 826 755 US-B1- 6 168 830**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The present invention relates to a method of sol-gel processing for preparing of a gel and nanoparticles, and also gels produced by said methods.

BACKGROUND OF THE INVENTION

The interest for nanostructured materials, which are synthesised from particles smaller than 100 nanometers, has been growing in the last decades. The interest has been stimulated by the large variety of applications in industries such as aerospace, steel, cosmetics, health, automotive, bioengineering, optoelectronics, computers, and electronics. Research to develop applications have resulted in technologies that make it possible to obtain multilayered films, porous pillars, thin films, nanocrystalline materials, nanopowders and clusters for e.g. paints, antiseptics, nanocomposites, drugs, biomedical implants and military components.

It is very well known that materials with nanoscale grain size show different properties from the same material in bulk form. These unique properties are related to the large number of surface or interface atoms. Nanostructured materials have good refractory properties, good chemical resistance, good mechanical resistance and hardness both at normal and high temperatures; they are especially amenable to sintering and reactions with different oxides. It has also been shown that the large number of surface atoms present in these materials influences the optical, electrical and magnetic properties.

It is now well recognized that the mechanical, electrical, chemical as well as catalytic properties of zirconia can be improved by using nanopowders instead of conventional micron-sized zirconia. When synthesizing of conventional Zr based materials the medium size of the particles is normally in the region of 10 microns, which is generally equivalent to $10^{15}$ atoms. Particles with diameters ranging between 0.1 and 1 micrometer are considered fine particles and are usually made up of $10^9$-$10^{10}$ atoms. Particles on a nano-scale, with dimensions ranging from 1 to 100 nanometers (nm) in at least one direction are of particular interest. Particles consisting of 200-300 atoms are designated clusters and their surface atoms can represent up to 80-90% of the total number of the atoms in the particle.

Over the past several years, a number of techniques have been developed for the production of ceramic nanoparticles and include: laser ablation, microwave plasma synthesis, spray pyrolysis, plasma arc synthesis, hydrodynamic cavitation and gas condensation using either a physical evaporation source or chemical precursors. Yet other methods of obtaining nanoparticles have been used, such as wire explosion techniques [1], the polymerizable complex method [2], flame synthesis of nanoparticles [3], the sonochemical method [4], solid state reaction [5], precipitation [6] and co-precipitation from a solution, and sol-gel synthesis.

The sol-gel method and co-precipitation from solutions form, together with oxidation-reduction reactions, hydrolysis, colloidal processes, and pyrolysis of organic-metallic complex substances, the chemical method*s* category [7]. Chemical methods have an important place among the experimental methods applied on pilot scale. This is so-called "soft chemistry" which uses relatively non-aggressive diluted solutions at moderate temperatures. The intense research and development work in this field has led to the availability of chemically pure, nano-sized powders with a narrow size distribution. These materials are valuable, but difficult to handle and are prone to agglomeration when using conventional processing routes.

At present, the most important chemical methods of obtaining nanopowders are the Pechini method, the co-precipitation method and the GN method. Keiji Yamahara, et al [8], used all three methods to obtain 8YSZ ($ZrO_2$ doped with 8 mol% $Y_2O_3$). In the *Pechini method* the zirconium salt ( $ZrO(NO_3)$ x$H_2O$ ) is dissolved in distilled water after which citric acid (CA - $C_6H_8O_7$) and ethylene glycol (EG - $C_2H_6O_2$) are added to the solution. In the *co-precipitation* method a solution of 30% ammonium hydroxide is added dropwise to zirconium salt dissolved in water. In the *GN method*, glycerin $C_3H_8O_3$ is added to a zirconium salt solution. Ch. Laberty- Robert obtained nanocrystallite powders of YSZ using the *Pechini method* using zirconium chloride and yttrium nitrate as precursors and ethylene glycol and citric acid as polymerization agents [7].

A method for obtaining nanoparticles that does not need expensive equipment is the sol-gel route. The sol-gel method is based on molecular synthesis of nanoparticles wherein the particles are built up by molecule-by-molecule addition. During the process of nanopowder formation close control over the nucleation and growth of the particles is required because the particles easily adhere and form agglomerates.

SUMMARY OF THE INVENTION

The present invention is directed to methods for sol-gel processing using inorganic metal salts.
The present invention is also related to methods for producing nanosize particles from inorganic metal salts.

The present invention is also directed to gels produced according to methods described herein.

The methods generally involve mixing together an inorganic metal salt, water and a mono or disaccharide. The macromolecular dispersant molecule pectin is also added. The resulting homogenous solution is dried at elevated temperature until it becomes completely gelatinized. Further thermal treatment of the dried gel will transform the material to nano-particles.

Several parameters of the method can be manipulated, making the method highly tuneable, and enabling production of sols, gels and particles with various desired characteristics. Variables that can be controlled and which control the product characteristics include the choice of metal salts, the metal salt concentration, ratio of mono or disaccharide solution to water, incubation temperature and time, and concentration of macromolecular dispersant.

FIGURE LEGENDS

Figure 1 is a schematic illustration of one embodiment of the invention, showing a process for the preparation of zirconium gels and particles as described in example 1.

Figure 2 shows the result of thermal analyses of the $ZrO_2$ sample prepared as described in example 1.

Figure 3 is an electron microscopy of $ZrO_2$ powders at 50 000 and 100 000 times magnification at 900 °C.

Figure 4 shoes X-ray diffraction of $ZrO_2$ powders at 900 and 1000 °C.

DETAILED DESCRIPTION OF THE INVENTION

The present invention relates to methods for production of gels and nanoparticles from inorganic metal salts. The methods offer sol-gel processing to produce a wide variety of materials of high quality.

The methods utilize homogenous nucleation and growth phenomena in inorganic solutions of mixed solvents, such as a mixed solvent of water and mono or disaccharides

The methods are applicable for production of sols, gels and nanoparticles from many metals such as aluminum, hafnium, silicon, zirconium, titanium, lanthanum, germanium, and tantalum, among others, by means of inorganic salts, e.g. nitrates, sulfates, sulfides, and chlorides of the same elements. Combinations of metals and salts can also be used. The concentration of the metal salt can range from about 0.005 M to about 0.5 M, more preferably from about 0.025 M to 0.02 M.

Preferred metals include zirconium and nickel, and the preferred salts used are $ZrCl_4$, $ZrO(NO)_3xH_2O$, $ZrOCl_2x8H_2O$, and $NiCO_3$, $Ni(COOH)_2$, $Ni(NO)_3\ 6H_2O$, $NiSO_47H_2O$.

Organic compounds that can be used include mono and disaccharides, such as fructose and glucose, and sucrose.

The present invention uses pectin in addition to mono and disaccharides as polymerization agents. Pectin can be added either before or after the incubation.

Neutralizing and/or stabilizing agents can be used to stabilize the formed particles. Ammonia can for instance be used for chemical stabilization of oxide particles.

A first aspect of the present invention is thus related to a method of sol-gel processing, wherein an inorganic metal salt, pectin, and mono or disaccharides are used, and that said method comprises the steps:

a) preparing a first aqueous solution comprising said inorganic metal salt, and preparing a second aqueous solution comprising said mono or disaccharides and pectin
b) mixing the first and second solutions to a third solution at a temperature from about 80 to 100°C,
c) incubating the combined solution from step b) at an elevated temperature of about 80 to 200 °C in order to gelatinize the third solution to a gel material.
A preferred embodment of this aspect further comprises a step of
d) thermal treatment of the gelatinized material from step c) at a temperature of from 500 to 1200°C, preferable from 700 to 1000 °C.

A further aspect of the invention relates to gels prepared by the methods indicated above.

Preferred embodiments of the invention relates to sol-gel processing wherein the metal salt contains a metal selected from the group consisting of aluminium, hafnium, silicon, zirconium, lanthanum, germanium, tantalum, nickel, combinations thereof, and combinations thereof with titanium.

Currently referred methods use metal salt containing zirconium or nickel.

Preferable, the solution of mono or disaccharides contains a compound selected from the group comprising sucrose, maltose, lactose, fructose and glucose, and most preferable the compound is sucrose.

The invention is further illustrated by the following example, which is not to be construed in any way as imposing limitations upon the scope of the invention.

EXPERIMENTAL SECTION

Example 1

Preparation of zirconium based sols and nanoparticles by using sucrose and pectin as precursor

Traditionally organic precursors used in the "chemical methods" referred to above are glycerol in the GN method, and ethylene glycol and citric acid in the Pechini method. The inventors of the present invention have surprisingly found that other precursor molecules can be used to obtain the gels and nanoparticles.

Convincing results have been obtained by using sucrose and pectin as precursor molecules. Pectin can be regarded as a dispersing agent, and we have also shown that the weight ratio of sucrose to pectin will influence the gelatinization process.

Sucrose, $C_6H_{12}O_6$, consists of one molecule of glucose and one molecule of fructose. $C_6H_{12}O_6$ is the chemical formula for both glucose and fructose, but they have slightly different structures. Table sugar is nearly pure sucrose (around 99% sucrose).

Pectin is present in ripe fruits and some vegetables. Pectin consists of a linear polysaccharide containing between 300 and 1,000 monosaccharide units.

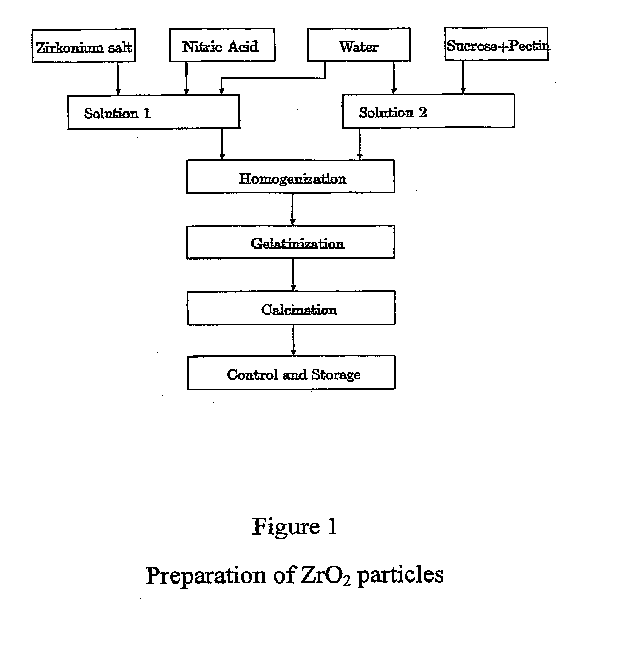

We followed the reaction scheme shown in figure 1. Basically this method requires as raw materials either esters or salts soluble in weakly acidic organic solutions. As source of zirconium we used zirconium nitrate, $Zr(NO_3)_4 \cdot 5H_2O$, a frequently used inorganic salt in sol-gel methods. The zirconium salt dissolves in water acidified with nitric acid with pH 4.5, forming a transparent solution at normal temperature (we call this solution 1 or first solution). Sucrose and pectin are dissolved into large quantities of water at a water:material ratio of 10:1 up to 15:1, thus obtaining another transparent liquid (this solution is termed "solution 2" or the second solution).

Next the two solutions are mixed by slowly pouring solution 1 into solution 2 under moderate continuous stirring in order to disperse the suspension. The aim of the subsequent, described below, treatment is to maintain the degree of dispersion on an advanced scale, to prevent agglomeration of the constituent particles and to avoid their solidification into crystals or raw granular formations during the different stages of the processing.

The solution is dried at 90-100°C and is allowed to stand for 48 hours, until it becomes completely gelatinized. Some $NO_x$ gases are emitted during this drying step. The dried gel, which takes the appearance of a brown resin, is then subjected to thermal treatment in order to be transformed into zirconia nanoparticles. We used 700, 900, and 1000°C. During heating, smoke and gases are emitted up to 500-600°C due to combustion of the organic component and of the nitric acid. A special oven with ventilation is therefore required.

We have performed several experiments with a view to studying the influence of the following factors:

- The concentration of zirconium salt (precursor salt) in solution 1;
- The mixing temperature of the liquids and the necessity of stirring during mixing and homogenization;
- The temperature and duration of gelatinization;
- The thermal treatment required to transform the precursor into oxide powder.

We found that the most favorable conditions for processing are the following:

- The concentration of the zirconium salt should be lower than 20g/l;
- The mixing of the two solutions should be done by dripping in the organic constituent while continuously stirring;
- After mixing and homogenization, stirring of the mixture should continue for 4 hours;
- The gelatinization temperature should be 90°C;
- In order to transform the mixture into dioxide the thermal treatment should be performed at a temperature between 700 and 1000°C.

The obtained powders were investigated by thermal analysis (Derivatograph Q 1500), BET analysis (Gemini 2380), TEM microscopy (JEOL-JEM-100S Electron Microscope), X-ray diffraction (Brucker-Nonius D8-System) using Cu-K$\alpha$ The medium size of the particles was determined from X-ray diffraction line broadening using the Scherrer formula.

Results

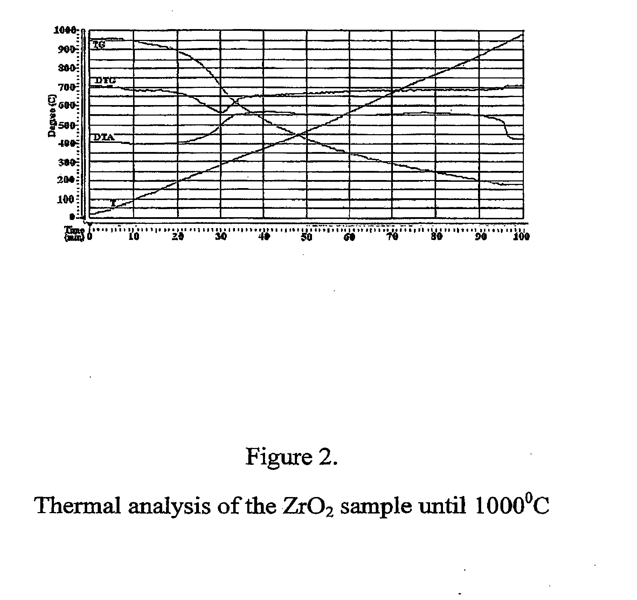

The thermal analysis (TA) were used to determine the chemical and physical properties of the samples as a function of temperature or time based on the thermal effects that occur during heating or cooling (see figure 2). The thermal analyses were performed on dried $ZrO_2$ gel using a Derivatograph Q 1500 (MOM Hungary) instrument which is based on the F. Pauli, J. Pauli and L. Erdey system.

Analyzing the TO and TDG curves of the $ZrO_2$ samples a 10 % mass reduction occurs between 100 and 200°C which can be due to elimination of the water residue. Between 200 and 350°C a 30 % mass reduction occurs due to the decomposition and evaporation of organic components. The mass reduction continues slowly until 950°C and then the mass remains constant. The total loss is 82 % of the initial mass.

Comparing the two above-mentioned curves with the DTA curve it can be observed that an exothermic process occurs at 200°C due to the oxidation of the organic components. The resulting gaseous reaction products are the cause of the mass reduction. The exothermic process continues with relatively constant intensity until 950°C, although the mass reduction is not so important in this interval. This can be explained if we assume the existence of another exothermic process, which takes place simultaneously with the oxidation of the organic components. This process might be the formation of $ZrO_2$ through oxidation. After passing the temperature of 950°C no processes can be observed either on the mass variation curves (TG) or on the DTA curve.

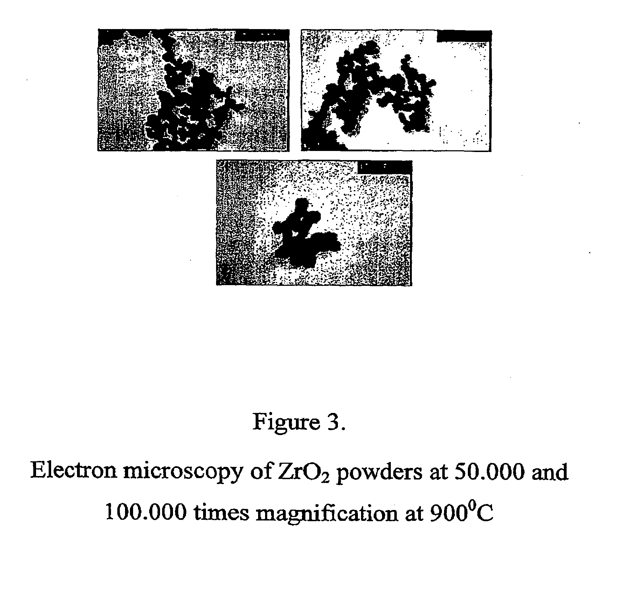

The morphology of the obtained powders was investigated using Transmission Electron Microscopy (TEM) performed by a JEOL - JEM - 100S Electron Microscope. At magnifications of 50.000 times the TEM analysis showed extremely small, clustered particles. The morphology of the particles could be visualized at 100.000 times magnification (see figure 3). We notice distinct particles with fairly uniform dimensions ranging from 50 to 90 nanometers.

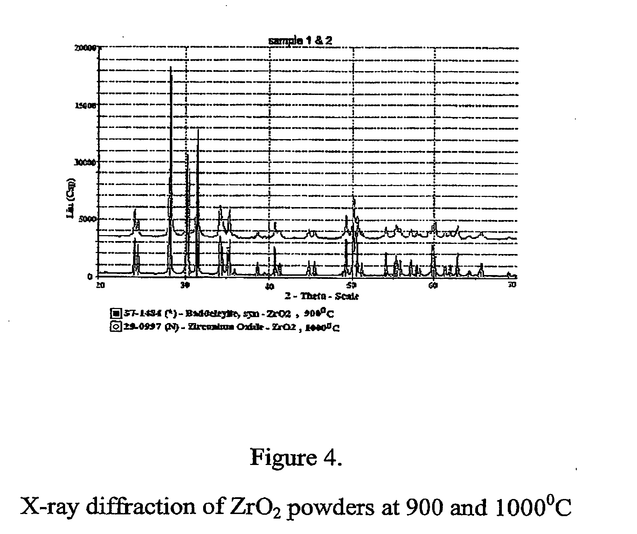

The X-ray diffraction data, determined by Brucker - Nonius D8 -System, are shown in figure 4. The reflections characteristic of baddeleyite ($ZrO_2$) are presents at 900°C and monoclinic zirconium oxide ($ZrO_2$) at 1000°C. The effect of increasing the temperature of the thermal treatment is to obtain a higher degree of crystallinity forming monoclinic, rather than amorphous, zirconia. The X-ray diffraction spectra were used also for determining the mean size of the particles. For calculation of the mean particle size (D) the Scherrer formula has been used:

$$D = \frac{k\lambda}{B\cos\theta}$$

where:

k - is a constant equal to unity;
$\lambda$ = 0.15406 nm, the wavelength of CuKalphal;
B - is the Integral Breadth ( radians), corrected for instrumental broadening;
6 - is the top position (14.5 deg used for all lines).

We found that the mean particle size is 53 nm in the case of the sample heat treated at 900°C, while for the sample heat-treated at 1000°C the size of the particles was 102 (see table 1).

**Table 1**: The medium size of the particles for the samples at 900 and 1000°C

| | Obs. Max 2-Theta (deg.) | $d$(obs. Max) Å | FWHM 2-Theta (deg.) | I.Breadth 2-Theta (deg.) | LBreadth (B) mess. minus ref. 2-Theta (deg.) | mean size (nm) |
|---|---|---|---|---|---|---|
| sample 1 | 28.245 | 3.15707 | 0.195 | 0.255 | 0.172 | 53 |
| sample 2 | 28.230 | 3.15869 | 0.141 | 0.172 | 0.089 | 102 |

The specific surface area of the samples was also determined by nitrogen adsorption according to the BET adsorption isotherm. The apparatus used was a Gemini 2380 from Micromeritics. A single point analysis gave 11.85 $m^2$/g, and a multipoint analysis 12.52 $m^2$/g, both with very good reproducibility. Using a density for $ZrO_2$ of 5600 kg/m$^3$ and assuming the particles to be round, this would correspond to particle diameters of 90.4 and 85.9 nm, respectively. This agrees roughly with the results from the XRD above. It must be said, however, that there are clearly necks between the particles shown in figure 3, something that would tend to reduce the specific surface area relatively to that expected from loose particles.

Conclusions

We shown have that it is possible to produce fine-grained zirconium oxide using sucrose and pectin as polymerization agents in relatively simple conditions and at low costs. We have also produced NiO particles with the same precursors/polymerization agents (data not shown).

The particles have practically uniform dimensions and distinct forms, they do not easily adhere to each other and their dimensions are lower than 100 nanometers.

The process takes 60 hours at most, and preferable the time to obtain a batch of nanorparticles is between 20 and 30 hours depending on the burning temperature and heating rate. This is an improvement compared to other chemical processes described in the literature.

References

[1] V. Giri Sabari, R. Sarathi, S. R. Chakravarthy, and Venkataseshaiah. Studies of production and characterization of nano A1203 powder using wire explosion technique. Materials Letters, 58:1947-1050, 2004.

[2] M. Popa and M. Kakihana. Ultrafine niobate ceramic powders in the system RExLi1-xNbO3 (RE: La, Pr, Sm, Er) synthesized by polymerizable complex method. Catalysis Today, 78:519-527, 2003.

[3] A. Singhal, G. Skandan, A. Wang, N. Glumac, and B. H. Kear. Minimizing aggregation effects in flame synthesized nanoparticles. Scripta Materialia, 44:2203-2207, 2001.

[4] J. Liang, X. Jiang, G. Liu, Z. Deng, J. Zhuang, F. Li, and Y. Li. Characterization and synthesis of pure ZrO2 nanopowders via sonochemical method. Mater. Res. Bull., 38:161-168, 2003.

[5] A. Udomporn and S. Ananta. The phase formation of lead titanate powders prepared by solid-state reaction. Current Applied Physics, 4:186-188, 2004.

[6] C. Y. Tai, M. H. Lee, and Y. C. Wu. Control of zirconia particle size by using two emulsion precipitation technique. Chem. Eng. Sci., 56:2389-2398, 2001.

[7] Ch. Laberty-Robert, F. Ansart, C. Deloget, M. Gaudon, and A. Rousset. Powder synthesis of nanocrystalline ZrO2-8% Y2O3 via a polymerization route. Mater. Res Bull., 36:2083-2101, 2001.

[8] K. Yamahara, P. C. Jacobson, J. S. Visco, and L. C. De Jonghe. Influence of powders on ionic conductivity of polycrystalline zirconias. In Solid Oxide Fuel Cells VIII, Electrochemical Society Proceedings, volume 2003-7, pages 187-195,2003.

**Claims**

1. A method of sol-gel processing, **characterized in that** an inorganic metal salt, pectin and mono or disaccharides are used, and that said method comprises the steps:

   a) preparing a first aqueous solution comprising said inorganic metal salt, and preparing a second aqueous solution comprising said mono or disaccharides and pectin,
   b) mixing the first and second solutions to a third solution at a temperature from about 80 to 100°C,
   c) incubating the combined solution from step b) at an elevated temperature of about 80 to 200 °C in order to gelatinize the third solution to a gel material.

2. A method according to claim 1, wherein the metal salt contains a metal selected from the group consisting of aluminium, hafnium, silicon, zirconium, lanthanum, germanium, tantalum, nickel, combinations thereof, and combinations thereof with titanium.

3. A method according to claim 1, wherein the concentration of inorganic salt in the third solution is in the range of 20 g/l to 60 g/l, preferable 26 g/l.

4. A method according to claim 1, wherein said mono or disaccharides contains a compound selected from the group comprising sucrose, maltose, lactose, fructose and glucose.

5. A method according to claim 1, wherein the mixing step b) is conducted by slowly pouring the first solution into the second solution in a continuous flow, and where the third solution thereafter is mixed at a rate of 120-130 rot/min.

6. A gel produced according to the method of one of the claims 1-5.

7. A method in accordance with claim 1, **characterized in that** the method further comprises a step of

   d) thermal treatment of the gelatinized material from step c) at a temperature of from 500 to 1200°C, preferable from 700 to 1000 °C.

8. A method in accordance with claim 7, for producing nanoparticles, wherein the nanoparticles are monodisperse.

9. A method in accordance with claim 7, for producing nanoparticles, wherein the nanoparticles are less than 100 nanometer in at least one dimension.

10. A method according to claim 7, wherein the metal salt contains a metal selected from the group consisting of aluminium, hafnium, silicon, zirconium, lanthanum, germanium, tantalum, nickel, combinations thereof, and combinations thereof with titanium.


**Patentansprüche**

1. Ein Verfahren zur Sol-Gel Verarbeitung, **dadurch gekennzeichnet, dass** ein anorganisches Metallsalz, Pektin und Mono- oder Disaccharide verwendet werden und das Verfahren die Schritte umfasst:

   a) Herstellen einer ersten wässrigen Lösung umfassend das anorganische Metallsalz, und Herstellen einer zweiten wässrigen Lösung umfassend die Mono- oder Disaccharide und Pektin,
   b) Mischen der ersten und zweiten Lösungen zu einer dritten Lösung bei einer Temperatur von etwa 80 bis 100°C,
   c) Inkubieren der vereinigten Lösung aus Schritt b) bei einer erhöhten Temperatur von etwa 80 bis 200°C, um die dritte Lösung zu einem Gelmaterial zu gelieren.

2. Ein Verfahren gemäß Anspruch 1, wobei das Metallsalz ein Metall, ausgewählt aus der Gruppe bestehend aus Aluminium, Hafnium, Silicium, Zirkonium, Lanthan, Germanium, Tantal, Nickel, Kombinationen davon, und Kombinationen davon mit Titan enthält.

3. Ein Verfahren gemäß Anspruch 1, wobei die Konzentration des anorganischen Salzes in der dritten Lösung im Bereich von 20g/l bis 60 g/l, bevorzugt 26 g/l, liegt.

4. Ein Verfahren gemäß Anspruch 1, wobei die Mono- oder Disaccharide eine Verbindung, ausgewählt aus der Gruppe umfassend Sucrose, Maltose, Lactose, Fructose und Glucose, enthalten.

5. Ein Verfahren gemäß Anspruch 1, wobei der Mischschritt b) ausgeführt wird durch langsames Gießen der ersten Lösung in die zweite Lösung in einem kontinuierlichen Fluss, und wobei die dritte Lösung danach bei einer Geschwindigkeit von 120-130 U/min vermischt wird.

6. Ein Gel, hergestellt gemäß dem Verfahren nach einem der Ansprüche 1 bis 5.

7. Ein Verfahren gemäß Anspruch 1, **dadurch gekennzeichnet, dass** das Verfahren ferner einen Schritt der

   d) Wärmebehandlung des gelierten Materials aus Schritt c) bei einer Temperatur von 500 bis 1200°C, bevorzugt von 700 bis 1000°C, umfasst.

**8.** Ein Verfahren gemäß Anspruch 7 zur Herstellung von Nanopartikeln, wobei die Nanopartikel monodispers sind.

**9.** Ein Verfahren gemäß Anspruch 7 zur Herstellung von Nanopartikeln, wobei die Nanopartikel kleiner als 100 Nanometer in wenigstens einer Dimension sind.

**10.** Ein Verfahren gemäß Anspruch 7, wobei das Metallsalz ein Metall, ausgewählt aus der Gruppe bestehend aus Aluminium, Hafnium, Silicium, Zirkonium, Lanthan, Germanium, Tantal, Nickel, Kombinationen davon, und Kombinationen davon mit Titan enthält.

**Revendications**

**1.** Méthode de traitement sol-gel, **caractérisée en ce qu'**un sel métallique inorganique, de la pectine et des mono ou disaccharides sont utilisés, et **en ce que** la dite méthode comprend les étapes de :

> a) préparer une première solution aqueuse comprenant le dit sel métallique inorganique, et préparer une deuxième solution aqueuse comprenant les dits mono ou disaccharides et la pectine,
> b) mélanger la première et la deuxième solution à une troisième solution à une température comprise entre 80 et 100°C.,
> c) incuber la solution combinée de l'étape b) à une température élevée comprise entre 80 et 200°C environ afin de faire gélifier la troisième solution en une matière gélatineuse.

**2.** Méthode selon la revendication 1, **caractérisée en ce que** le sel métallique contient un métal choisi dans le groupe composé de l'aluminium, le hafnium, le silicium, le zirconium, le lanthane, le germanium, le tantale, le nickel, des combinaisons de ceux-ci et des combinaison de ceux-ci avec du titane.

**3.** Méthode selon la revendication 1, **caractérisée en ce que** la concentration en sel inorganique de la troisième solution est comprise entre 20g/L et 60g/L, de préférence égale à 26g/L.

**4.** Méthode selon la revendication 1, **caractérisée en ce que** les dits mono ou disaccharides contiennent un composé choisi dans le groupe comprenant le sucrose, le maltose, le lactose, le fructose et le glucose.

**5.** Méthode selon la revendication 1, **caractérisée en ce que** l'étape b) de mélange est conduite en versant lentement la première solution dans la deuxième en un flux continu et où la troisième solution est ensuite mélangée à un taux de 120-130 rot/min.

**6.** Gel produit par la méthode selon l'une des revendications 1 à 5.

**7.** Méthode selon la revendication 1, **caractérisée en ce que** la méthode comprend par ailleurs une étape de :

> d) traitement thermique du matériau gélifié de l'étape c) à une température comprise entre 500 et 1200°C, de préférence entre 700 et 1000°C.

**8.** Méthode selon la revendication 7, pour produire des nanoparticles, **caractérisée en ce que** les nanoparticules sont monodispersées.

**9.** Méthode selon la revendication 7, pour produire des nanoparticles, **caractérisée en ce que** les nanoparticles mesurent moins de 100 nanomètres dans au moins une dimension.

**10.** Méthode selon la revendication 7, **caractérisée en ce que** le sel métallique contient un métal choisi dans le groupe composé de l'aluminium, la hafnium, le silicium, le zirconium, le lanthane, le germanium, le tantale, le nickel, des combinaisons de ceux-ci et des combinaisons de ceux-ci avec le titane.

Figure 1

Preparation of $ZrO_2$ particles

Figure 2.

Thermal analysis of the $ZrO_2$ sample until $1000^0C$

Figure 3.

Electron microscopy of $ZrO_2$ powders at 50.000 and 100.000 times magnification at $900^0C$

Figure 4.

X-ray diffraction of $ZrO_2$ powders at 900 and $1000^0C$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **V. Giri Sabari ; R. Sarathi ; S. R. Chakravarthy ; Venkataseshaiah.** Studies of production and characterization of nano A1203 powder using wire explosion technique. *Materials Letters,* 2004, vol. 58, 1947-1050
- **M. Popa ; M. Kakihana.** Ultrafine niobate ceramic powders in the system RExLi1-xNbO3 (RE: La, Pr, Sm, Er) synthesized by polymerizable complex method. *Catalysis Today,* 2003, vol. 78, 519-527
- **A. Singhal ; G. Skandan ; A. Wang ; N. Glumac ; B. H. Kear.** Minimizing aggregation effects in flame synthesized nanoparticles. *Scripta Materialia,* 2001, vol. 44, 2203-2207
- **J. Liang ; X. Jiang ; G. Liu ; Z. Deng ; J. Zhuang ; F. Li ; Y. Li.** Characterization and synthesis of pure ZrO2 nanopowders via sonochemical method. *Mater. Res. Bull.,* 2003, vol. 38, 161-168

- **A. Udomporn ; S. Ananta.** The phase formation of lead titanate powders prepared by solid-state reaction. *Current Applied Physics,* 2004, vol. 4, 186-188
- **C. Y. Tai ; M. H. Lee ; Y. C. Wu.** Control of zirconia particle size by using two emulsion precipitation technique. *Chem. Eng. Sci.,* 2001, vol. 56, 2389-2398
- **Ch. Laberty-Robert ; F. Ansart ; C. Deloget ; M. Gaudon ; A. Rousset.** Powder synthesis of nanocrystalline ZrO2-8% Y2O3 via a polymerization route. *Mater. Res Bull.,* 2001, vol. 36, 2083-2101
- **K. Yamahara ; P. C. Jacobson ; J. S. Visco ; L. C. De Jonghe.** Influence of powders on ionic conductivity of polycrystalline zirconias. *Solid Oxide Fuel Cells VIII, Electrochemical Society Proceedings,* 2003, vol. 2003-7, 187-195